Europäisches Patentamt

European Patent Office

Office européen des brevets

(11) Numéro de publication: **0 347 337**
**A2**

## DEMANDE DE BREVET EUROPEEN

(21) Numéro de dépôt: 89420177.1

(22) Date de dépôt: 22.05.89

(51) Int. Cl.⁴: **B 60 L 13/04**

(30) Priorité: 13.06.88 US 205870

(43) Date de publication de la demande:
20.12.89 Bulletin 89/51

(84) Etats contractants désignés:
AT BE DE ES FR GB IT NL SE

(71) Demandeur: **Michna, Claus Georg**
**4 Toby Lane**
**Brookfield Center Connecticut 06804 (US)**

(72) Inventeur: **Michna, Claus Georg**
**4 Toby Lane**
**Brookfield Center Connecticut 06804 (US)**

(74) Mandataire: **Dupuis, François**
**Cabinet Charras 3 Place de l'Hôtel-de-Ville BP 203**
**F-42005 St. Etienne Cédex 1 (FR)**

(54) Dispositif de lévitation électromagnétique pour véhicules sur roues.

(57) Le présente invention assure la réalisation d'un dispositif électromagnétique prévue pour la lévitation et le déplacement d'un véhicule à roues sur une surface sans eau, avec une dépense d'énergie minimum. Le dispositif électromagnétique comprend : une courroie ou bande sans fin (12) en contact avec la surface sur laquelle le véhicule est déplacé ; une série d'aimants (16 - 54) positionnés sur la surface intérieure de la bande ou courroie, qui repoussent les aimants d'un autre série d'aimants (24-36) suspendus à partir de la caisse et des essieux du véhicule ; un jeu de roues sur les essieux, ces roues s'engageant avec une voie positionnée entre les séries d'aimants sur la surface intérieure de la bande ou courroie ; et un jeu de harnais électriques (26-27) prévus pour polariser les séries d'aimants, lesquels aimants se repoussent les uns les autres de manière à transférer des essieux à la bande ou courroie sans fin le poids du véhicule sur roues.

FIG. 1

**Description**

## DISPOSITIF DE LEVITATION ELECTROMAGNETIQUE POUR VEHICULES SUR ROUES

### PREAMBULE

La présente invention est relative à des véhicules sur roues circulant sur des surfaces exemptes d'eau, y compris des rails, des routes, des routes, etc... Plus particulièrement, l'invention se rapporte à un moyen, à savoir un dispositif électromagnétique, pour réduire l'énergie nécessaire au déplacement d'un véhicule sur roues, ainsi que pour suspendre et transférer le poids du véhicule sur roues de ses essieux au dispositif électromagnétique.

En ce qui concerne le fonctionnement de tous véhicules, il existe un besoin de réduire l'usure sur ces véhicules, ainsi que de réduire les frais représentés par leur utilisation. Pour ce qui est par exemple de l'utilisation de camions (notamment de camions à remorque) et de voitures automobiles, des frais élevés sont entrainés par leur entretien et leur maintien en bon état, de même que par les réparations de route à effectuer annuellement. Ceci est également vrai en ce qui concerne les wagons de chemin de fer et les locomotives, où l'on a continuellement à faire face à des frais de réparation, d'entretien et de maintien en bon état des wagons et des locomotives, ainsi qu'à des frais de maintien en bon état des voies ferrées, des assises de voies et des rails.

Egalement, et d'une façon générale, il existe un besoin de réduction, ou tout au moins de minoration, des dépenses d'énergie pour l'utilisation des véhicules. Les frais pour l'exploitation des véhicules augmentent sans arrêt avec l'augmentation des coûts de l'énergie, c'est à dire des prix du carburant, du charbon et similaires. Dans ce contexte, il existe un besoin de réduction de la quantité d'énergie nécessaire pour l'utilisation des véhicules, et donc de réduction des frais d'énergie.

Il n'a pas été fait de tentative notable en vue de réduire les frais d'exploitation des véhicules considérés, ou les frais de maintien en bon état des routes, des voies ferrées et similaires.

Cependant, il y a eu des moyens magnétiques utilisés dans l'exploitation de véhicules. Par exemple, des moyens électromagnétiques, c'est à dire des dispositifs électromagnétiques, ont été utilisés pour attirer et repousser des surfaces métalliques de toutes sortes. Ces dispositifs électromagnétiques ont été utilisés pour attracter les roues d'un véhicule sur les rails sur lesquels le véhicule devait être entraîné ou propulsé. En fait, des dispositifs magnétiques de ce genre ont été employés sur des wagons de chemin de fer mis en circulation sur une voie de chemin de fer établie en pente, et le long d'une voie de cette nature. Dans un cas de ce genre, les dispositifs électromagnétiques sont d'une puissance suffisante pour faire adhérer les roues du véhicule sur la surface des rails sur lesquels le véhicule est entrainé. L'utilisation, pour un service de ce genre, de ces dispositifs électromagnétiques, est tout à fait onéreuse, et elle n'est pas applicable d'une manière suffisamment pratique. Les électroaimants ne sont pas en mesure d'être utilisés pour réduire la quantité d'énergie nécessaire pour le déplacement ou l'entrainement d'un véhicule sur roues, et il est absolument certain que les électroaimants n'ont pas été employés pour la suspension ou le transfert du poids du véhicule lorsque celui-ci se déplace sur une surface, et qu'ils n'ont pas été utilisés non plus pour prolonger la durée de service d'un véhicule sur roues.

Des électro-aimants ont été également utilisés dans l'exploitation de véhicules sans roues, tels que ceux décrits dans les brevets U.S. Nᵘ 3.791.309 et 3.951.074 . Toutefois, dans des cas de ce genre, il est nécessaire de prévoir des rails spéciaux ou une ligne de voies ferrées dpéciale pour le service de ces véhicules sans roues. Les frais représentés par des rails et des lignes de voies ferrées de ce genre seraient prohibitifs dans notre exploitation actuelle de lignes de chemin de fer, et de tels wagons sans roues seraient inadaptables pour notre présent système de rails.

En conséquence, un objet de la présente invention consiste à prévoir un moyen permettant aussi bien la suspension que le transfert du poids d'un véhicule sur roues, et permettant également de déplacer ce véhicule sur une surface avec un minimum d'énergie nécessaire pour le déplacement du dit véhicule sur roues.

Et par ailleurs, un but de la présente invention consiste également à prévoir un moyen, c'est à dire un dispositif électromagnétique, permettant de réduire les frais d'exploitation et d'entretien des véhicules, et permettant tout aussi bien de réduire la puissance énergétique nécessaire pour le fonctionnement de ces véhicules, du fait que ceux-ci produisent de l'énergie électrique lors de leur utilisation.

### EXPOSE DES DIVULGATIONS ANTERIEURES

Le brevet U.S. Nᵘ 714.851 divulgue un wagon de chemin de fer qui utilise un moyen magnétique pour réduire la friction incidente au mouvement des wagons le long des rails.

Le brevet U.S. Nᵘ divulgue un véhicule magnétique supporté par adhérence sur une surface de paroi inclinée et prévu pour circuler sur cette surface de paroi dépendante d'un élément de structure réalisé à partir de matériau magnétique fort.

Le brevet U.S. Nᵘ 3.927.735 divulgue un système magnétique pour le guidage sans contact d'un véhicule se déplaçant le long d'un rail, avec une pluralité d'aimants individuels sur le véhicule, disposés les uns derrière les autres dans le sens de circulation du véhicule.

Le brevet U.S. Nᵘ 3.960.229 divulgue un véhicule avec entrainement par moteur, se déplaçant à l'aide d'une bande sous forme de chaîne, qui supporte une série de tampons électromagnétiques. Les tampons, lorsqu'il sont excités, assurent la production d'une puissante force électromagnétique permettant au véhicule d'adhérer sur une surface d'acier inclinée, en ce qui concerne un navire, par exemple.

## RESUME DE L'INVENTION

La présente invention assure la réalisation d'un dispositif électromagnétique pour la lévitation et le déplacement d'un véhicule sur roues sur une surface exempte d'eau avec une réduction substantielle de l'énergie nécessaire et des frais pour l'exploitation du véhicule sur roues. Le dispositif électromagnétique comprend:

(a) Une bande ou courroie sans fin articulée ou à chainons prévue pour être en contact avec la surface sur laquelle se déplace le dit véhicule ;

(b) Une première et une deuxième série d'aimants positionnés sur la surface intérieure de la dite bande ou courroie articulée, et prévus pour repousser simultanément une troisième série d'aimants suspendus à partir de la caisse du dit véhicule ; et une quatrième série d'aimants suspendus à partir des essieux du dit véhicule ;

(c) Une voie de roulement de roues disposée entre la première et la deuxième série d'aimants, positionnés sur la surface intérieure de la dite bande ou courroie ;

(d) Un jeu de roues métalliques positionnées sur essieux du dit véhicule et prévues pour s'engager avec la dite voie de roulement de roues de manière a assurer le déplacement de la dite bande ou courroie grâce à la rotation des dites roues ; et

(e) Un jeu de harnais électriques comportant chacun une barre métallique fixe avec cannelure de bord, fixée aux dites roues, et un harnais de câblage électrique révolutif dans la dite cannelure de bord en coordination avec la bande ou courroie en mouvement, chacun des dits harnais électriques étant prévu pour conduire de l'éner gie électrique depuis la source d'énergie du véhicule jusqu'à la dite série d'aimants positionnés sur la surface intérieure de la dite bande ou courroie, de manière que les dites séries d'aimants suspendus à partir de la caisse du véhicule et des essieux sont mises en circuit, les séries d'aimants disposés sur la surface intérieure de la dite bande ou courroie soient également excitées afin de repousser les dits aimants suspendus, ce qui assure ainsi le transfert du poids du véhicule de l'essieu à la dite bande ou courroie sans fin, de façon à suspendre le véhicule et à réduire l'énergie nécessaire pour le déplacement du dit véhicule.

## DESCRIPTION SUCCINCTE DES DESSINS

Les avantages et les autres buts de l'invention deviendront apparents en examinant les dessins en liaison avec la description détaillée de la présente invention donnée ci-après. En ce qui concerne les dessins :

la Fig. 1 est une vue en élévation d'un dispositif unitaire de voie de roulement pour roue unique électromagnétique de la présente invention, en condition d'assemblage ;

la Fig. 2 est une vue en élévation d'un dispositif unitaire de voie de roulement pour roue double électromagnétique de la présente invention, en condition d'assemblage ;

la Fig. 3 montre les éléments séparés de l'unité de voie de roulement pour roue double de la Fig. 2 ;

la Fig. 4A est une vue en coupe partielle de l'unité de voie de roulement de roue unique de la Fig. 1 ;

la Fig. 4B est une vue en coupe partielle de l'unité de voie de roulement pour roue double de la Fig. 2;

la Fig. 5 est une vue latérale du harnais de câblage électrique pour charger les aimants sur la bande ou courroie sans fin du dispositif électromagnétique représenté aux Fig. 1 et 2 ;

la Fig. 6 est une vue arrière partielle de l'unité de voie de roulement du roue double de la Fig. 2 ;

La Fig 7A est une vue arrière partielle d'une unité de voie de chemin de fer selon la présente invention ;

la Fig. 7B est une vue latérale partielle de l'unité de voie de chemin de fer montrée à la Fig. 7A ;

la Fig. 8A est une vue arrière partielle du moyen électronique pour le fonctionnement de crampons escamotables dans le dispositif électromagnétique des Fig. 1 et 2 ;

la Fig. 8B montre le système de barre de pression du moyen électronique de la Fig. 8A ;

la Fig. 8C illustre les crampons escamotables du moyen électronique de la Fig. 8A, dans leur position de saillie à l'extérieur ;

la Fig. 9 est une vue latérale d'une unité de voie de roulement unique comportant un patin incorporé selon la présente invention ; et

la Fig. 10 est une vue en élévation arrière du moyen électromagnétique aménage avec la courroie ou bande sans fin des Fig. 1 et 2.

## DESCRIPTION DETAILLEE DE L'INVENTION

En ce qui concerne la description du présent dispositif électromagnétique, tous les composants illustrés dans les dessins sont décrits sous l'angle de leur but et de leur fonction dans le service du présent dispositif électromagnétique. Tous composants non représentés dans les dessins seront signalés en conséquence.

Comme exposé ci-avant, le présent dispositif électromagnétique est spécifiquement conçu et aménagé pour transférer et suspendre le poids de véhicules sur roues, ainsi que pour réduire dans une mesure substantielle la quantité d'énergie et les frais nécessaires pour l'exploitation des véhicules.

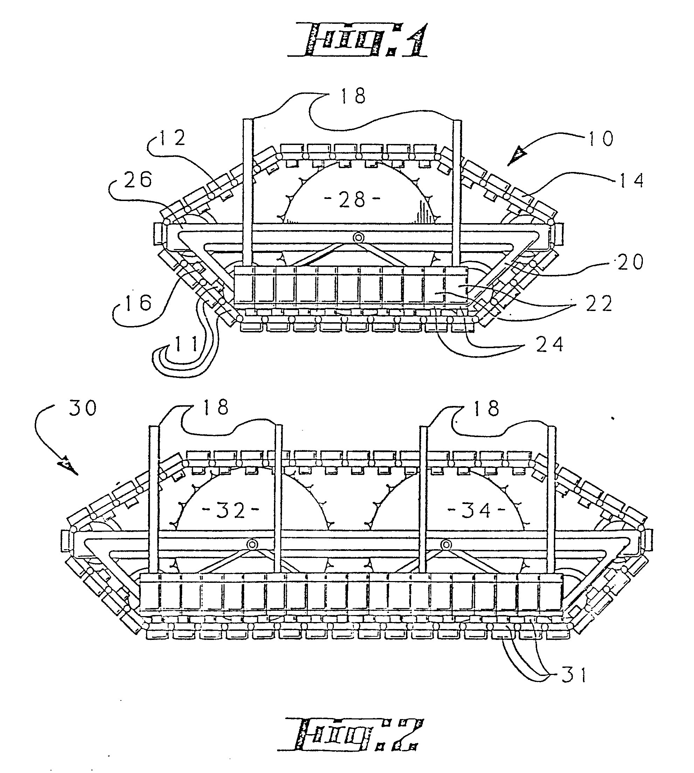

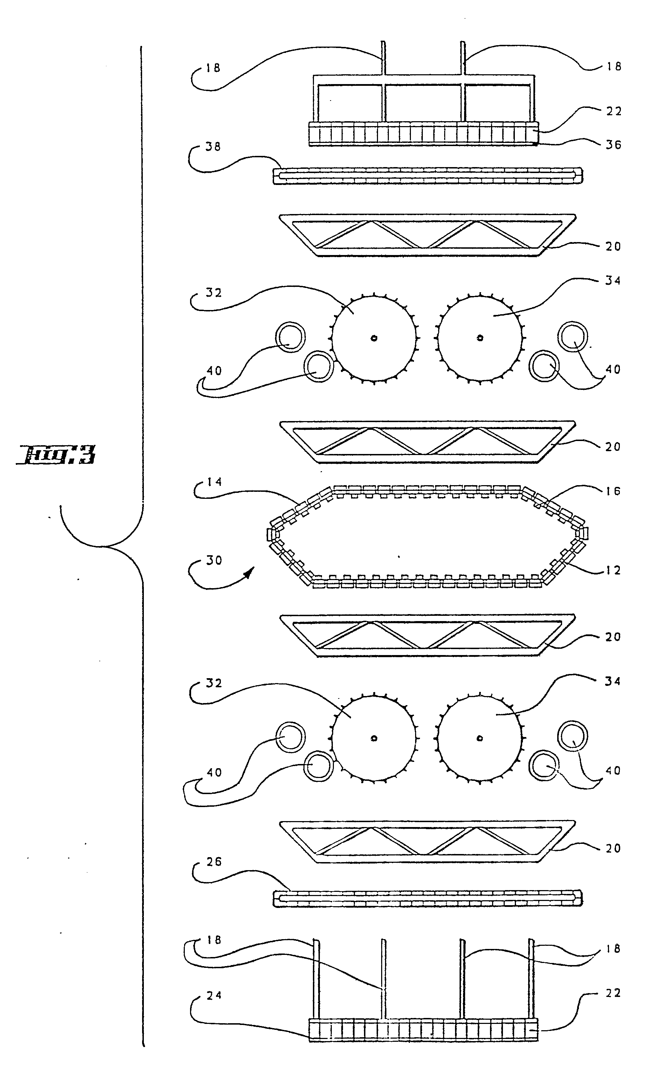

En ce qui concerne les Fig. 1 et 2, des dispositifs électromagnétiques (10) et (30) sont représentés dans ces Figures, les dits dispositifs (10, 30) pouvant être utilisés sur tout véhicule monté sur roues se déplaçant sur toute surface quelconque exempte d'eau, par exemple dans un désert, sur des routes, sur des voies de chemin de fer, sur des auto-routes, etc...

Comme montré à la Fig. 1, le dispositif (10) est constitué par une bande sans fin articulée à chainons (12) comportant des tampons caoutchouc (14) sur la surface extérieure (15) et une première série d'aimants (16) sur la surface intérieure (17). Une roue d'entrainement (28) est positionnée et engagée sur la surface intérieure (17) de la bande sans fin articulée à chainons (12).

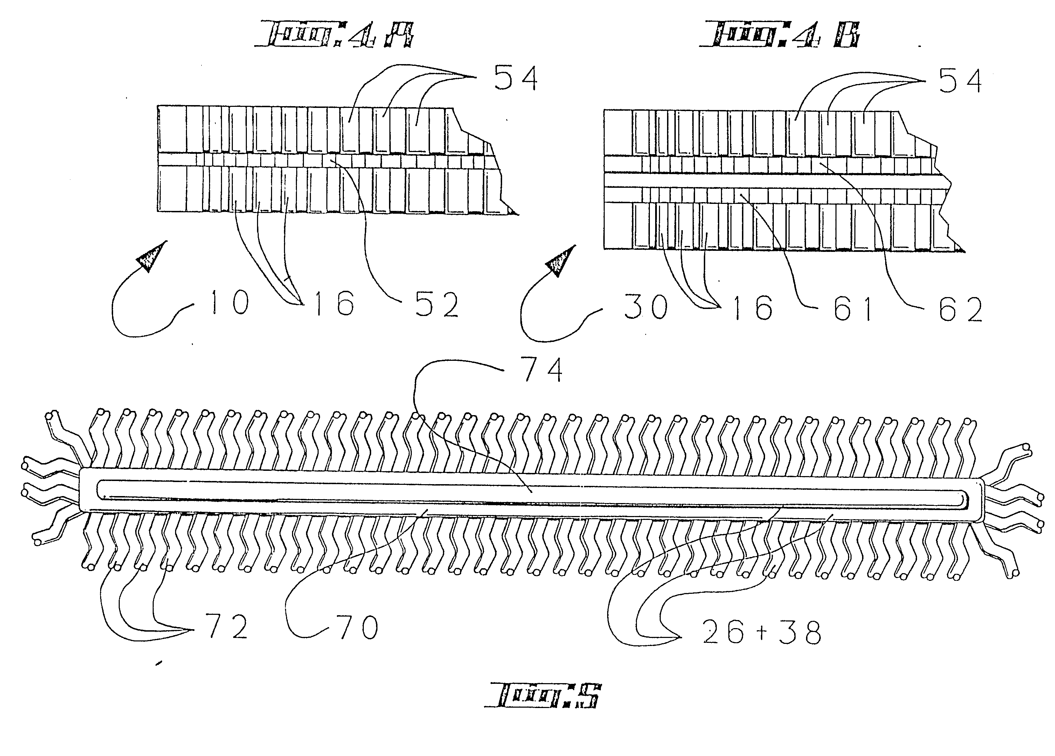

La trajectoire de la bande articulée à chainons (12) est dirigée autour de roues (40) établissant le profil de la bande, comme montré à la Fig. 3. Les aimants (16) sont excités par du courant produit par l'intermédiaire d'un harnais électrique (26), qui est relié électriquement à une source de courant électrique (non représentée) du véhicule.

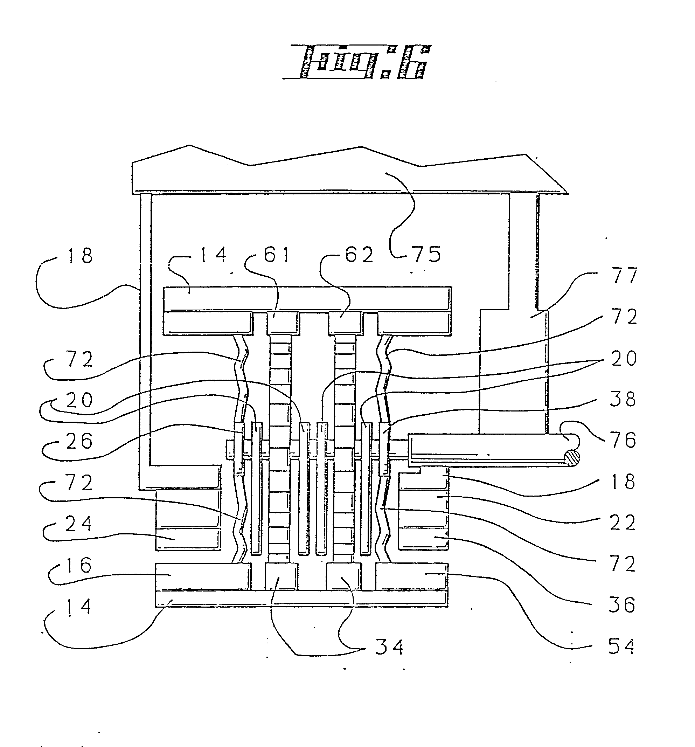

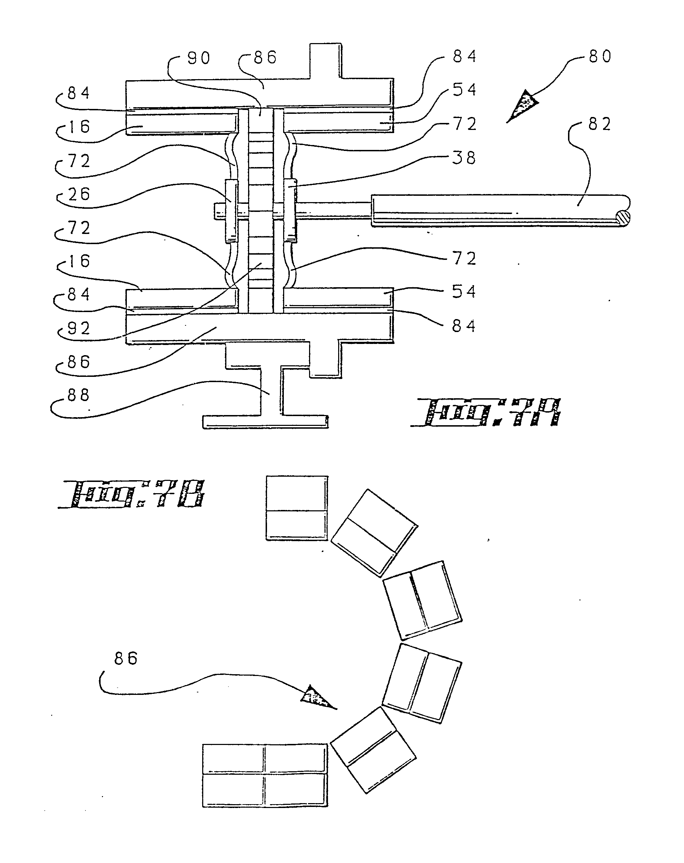

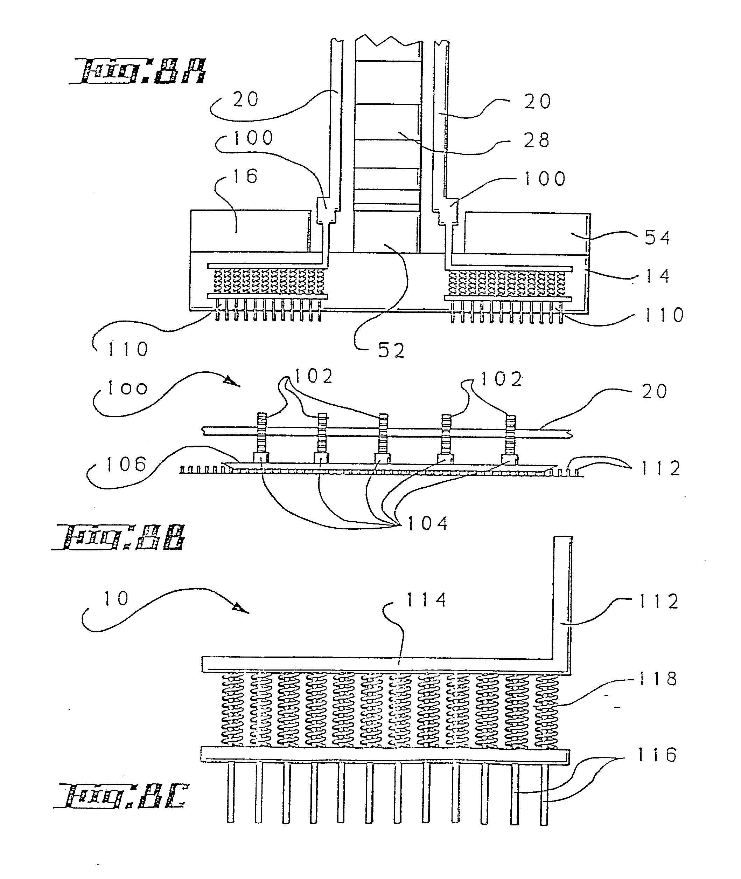

De façon similaire, comme montré à la Fig. 6, les aimants (54) d'une deuxième série sont excités par du courant produit par l'intermédiaire du harnais électrique (27) qui est relié avec la source de courant électrique (non représentée) du véhicule. En outre, il est prévu, comme montré à la Fig. 6, une troisième série d'aimants (24) et une quatrième série d'aimants (36), qui sont excités à partir de la source de courant électrique du véhicule par l'intermédiaire de câbles électriques et des barres de fixation (18).

Comme on pourra le comprendre, le dispositif électromagnétique (10) est aménagé pour circuler d'une manière horizontale sur des surfaces qui sont généralement plates, mais il peut circuler sur des surfaces et des voies en plan incliné, comme décrit ci-après. Ce qui signifie qu'un véhicule doté du présent dispositif électromagnétique est apte à franchir toute distance quelconque sans aucune restriction pour le profil de la surface sur laquelle il se déplace. .

Comme montré à la Fig. 1, l'unité de voie de roulement de roue unique (10) inclue des barres de fixation de véhicule (18) qui fixent à la caisse du véhicule les amortisseurs caoutchouc (22) et la troisième série d'aimants (24). Il est également prévu des montures de roue (20) pour faire châssis autour de la roue d'entrainement (28) et des roues (40) établissant la profil de la bande articulée du dispositif électromagnétique (10).

En ce qui concerne la Fig. 2, il est représenté dans cette Figure une unité électromagnétique de voie de roulement à roue double (30). Cette unité (30) inclue deux roues d'entrainement (32) et (34) avec conjointement des roues (40) établissant le profil de la bande articulée, comme montré à la Fig. 3. Comme dans le cas de l'unité de voie de roulement de roue unique (10) de la Fig. 1, l'unité de voie de roulement de roue double (30) inclue la bande sans fin articulée (12), les tampons caoutchouc (14), la première série d'aimants (16), la troisième série d'aimants (24), les barres de fixation (18), les montures de roues (20), les amortisseurs (22), et le harnais électrique (26).

Comme dans la Fig. 1, la deuxième série d'aimants (54) et la quatrième série d'aimants (36) ne sont pas montrées à la Fig. 2, mais elles sont illustrées à la Fig. 3. De même, il existe une enceinte d'unité de voie de roulement (non représentée) aussi bien pour l'unité de voie de roulement de roue unique (10) que pour l'unité de voie de roulement pour roue double (30).

Les divers composants séparés du dispositif électromagnétique (30) sont représentés de façon détaillée à la Fig. 3.

En ce qui concerne la Fig. 3, les deux moitiés de l'unité (30) sont représentées à partir du haut, positionnées dans le centre de la Fig. 3. Lorsque les différents composants sont assemblés, ils se présentent comme illustré à la Fig. 2.

Pour ce qui est plus spécifiquement de la Fig. 3, on a représenté, en partant du haut, la barre de fixation (18), les amortisseurs (22), la quatrième série d'aimants (36), le harnais de câblage électrique intérieur (27), la monture de roue (20), les roues d'entrainement (32) et (34), les roues (40) établissant le profil de la bande ou courroie articulée, la monture de roue (20), les roues (40) établissant le profil de la bande ou courroie articulée, la monture de roue (20), la courroie ou bande sans fin articulée (12), les tampons caoutchouc (14), la première série d'aimants (16), la monture de roue (20), les roues d'entrainement (32) et (40), les roues (40) établissant le profil de la bande ou courroie articulée, la monture de roue (20), le harnais de câblage électrique extérieur (26), la troisième série d'aimants (24), les amortisseurs (22), et la barre de fixation (18).

En ce qui concerne la Fig. 3, et comme illustré aux Fig. 1 et 2, les différentes roues qui sont utilisées dans le dispositif électromagnétique (30) incluent les roues d'entrainement (32) et (34), s'engageant avec la bande sans fin articulée (12) pour le déplacement du véhicule. Il est également montré dans cette Figure les roues (40) établissant le profil de la bande articulée et formant le parcours le long duquel se déplace la bande articulée (12). On a prévu par ailleurs le monture de roues (20) afin de maintenir la position des roues durant le mouvement du véhicule.

La Fig. 4A représente la vue intérieure de dessus d'une disposition d'unité de voie de roulement de roue unique du dispositif électromagnétique (10), qui comporte : une voie d'entrainement unique (52) ; la première série d'aimants (16) disposés sur un côté de cette voie d'entrainement unique (52) ; et la deuxième série d'aimants (54) sur l'autre côté de la dite voie.

De façon identique, la Fig. 4B représente la vue intérieure de dessus d'une disposition d'unité de voie de roulement de roue double du dispositif électromagnétique (30), qui comporte : deux voies d'entrainement (61) et (62) ; avec une première série d'aimants (16) disposés sur un côté des voies d'entrainement respectives (61) et (62) ; et la deuxième série d'aimants (54) positionnés sur l'autre côté de ces voies.

Le harnais électrique (26) est illustré à la Fig. 5, le harnais électrique (27) n'étant pas représenté, et ces harnais sont les moyens par l'intermédiaire desquels l'énergie électrique est alimentée sur la première série d'aimants (16) et la deuxième série d'aimants (54), (ces séries d'aimants ne sont pas représentées). Cette énergie électrique est transmise par l'intermédiaire de câbles électriques bobinés (72) à chacune des séries d'aimants (16) et (54). Les harnais (26) et (27) sont positionnés des deux côtés des montures de roues (20). Sur chacun des harnais (26) et (27) sont fixés, à l'aide de barres de fixation (74), des barres métalliques de harnais (70).

Dans les barres métalliques (70) de chaque harnais (26) et (27), il est prévu une cannelure ou gorge de bord fixe dans lequel un harnais de câblage électrique tourne en coordination avec la bande articulée en mouvement (12). Chacun des harnais électriques (26) et (27) est prévu pour conduire de l'énergie électrique, à partir de la source d'énergie du véhicule (non représentée) sur la première série d'aimants (16) et la deuxième série d'aimants (54), positionnés sur la surface intérieure de la bande articulée (12). Par conséquent, lorsque la troisième série (24) et la quatrième série (36) d'aimants suspendus, respectivement, à partir de la caisse du véhicule et des essieux, sont en condition d'engagement, las aimants de la première série (16) et de la deuxième série (54), disposés sur la surface intérieure de la bande articulée (12), sont également excitës de façon à repousser la troisième série (24) et la quatrième série (36) d'aimants suspendus, le poids du véhicule se trouvant ainsi transféré de l'essieu à la bande articulée (12), de façon à suspendre le véhicule et à réduire l'énergie nécessaire pour la marche de ce véhicule.

La Fig. 6 représente une vue en coupe du dispositif électromagnétique (30), tel que celui-ci est utilisé dans un camion ou dans une voiture automobile. Comme montré, les roues d'entrainement (32) et (34) sont positionnées dans des voies d'entrainement (61) et (62), qui sont entourées par des gardes de roues (63) et (64). En ce qui concerne la bande articulée (12), les aimants de la première série d'aimants (16) de cette bande interagissent avec les aimants de la troisième série d'aimants (24), et les aimants de la deuxième série d'aimants (54) de la bande interagissent avec les aimants de la quatrième série d'aimants (36). Les aimants (24) et (36) sont suspendus, respectivement, à partir de la caisse de véhicule (75) et de l'essieu (76). Ceci constitue les moyens pour transférer le poids du véhicule de l'essieu (76) à la bande articulée (12).

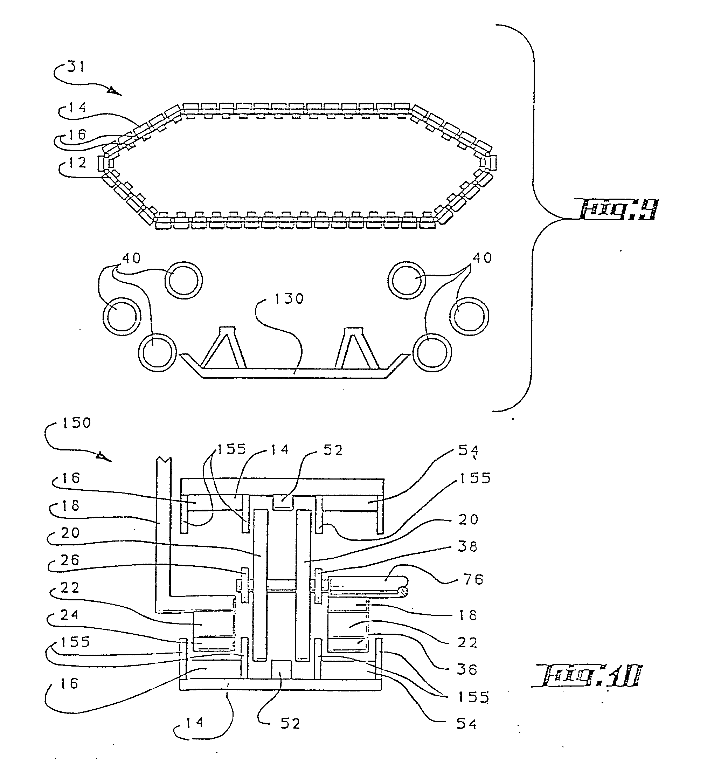

La Fig. 7A est une vue arrière partielle d'une unité de voie de chemin de fer (80) dans son aménagement avec le dispositif électromagnétique (10) de la présente invention. Comme montré, l'unité de voie de chemin de fer (80) inclue une bande d'acier pleine (86) constituant le noyau de l'unité (80). De même, l'unité de voie (80) inclue une couche désensibilisatrice magnétique (84) destinée à empêcher le magnétisme de pénétrer dans la bande d'acier (86) à partir de la première série d'aimants (16) et de la deuxième série d'aimants (54). Une roue d'entrainement (92) est prévue pour l'entrainement de l'unité de voie (80) sur le rail (88). L'essieu (82) passe à travers la roue d'entrainement (92) et les harnais électriques (26) et (27) ainsi que les enroulements de harnais (72), par l'intermédiaire desquels l'énergie électrique est transmise à la première série d'aimants (16) et à la deuxième série d'aimants (54).

Pour plus de clarté dans le dessin, les autres composants de l'unité (80) n'ont pas été représentés ; ces composant ont été illustrés pour les dispositifs électromagnétiques (10) et (30) montrés aux Fig. 1,2,3.

La Fig. 7 B illustre une portion de la bande d'acier souple (86).

En ce qui concerne les Fig. 8A, 8B et 8C, ces Figures représentent un mécanisme, à savoir une unité de fixation de barres (100) pour des crampons de traction (116), qui est prévue pour la sortie et pour l'escamotage des crampons (116) dans les tampons caoutchouc (14) de l'unité de voie de roulement de roue unique (10) et de l'unité de voie de roulement à roue double (30), montrées aux Fig. 1 et 2.

L'unité de réglage à barres (100) est disposée, (comme montré à la Fig. 8A), à l'extérieur des montures de roues (20), de manière à faire contact avec les axes de crampon (112) de manière à faire sortir ou à escamoter les crampons (116) en fonction de ce qui est nécessaire.

L'unité de réglage à barres (100), représentée de façon détaillée à la Fig. 8B, inclue une partie de la monture de roue (20), des tringles de guidage (102, des moteurs (104), et une barre de réglage (106).

Lorsque cela est nécessaire, par exemple en temps d'hiver, le conducteur du véhicule excite les moteurs (104) positionnés sur la barre de réglage (106) de manière à baisser la barre (106) pour que celle-ci fasse pression sur les axes de crampon (112), les crampons (116) étant ainsi sortis uniformément par la barre à crampons (114) de manière que ces crampons pénètrent dans les tampons caoutchouc (14). Cette descente et cette remontée de la barre (106) sur les barres de guidage (102) peut avoir l'effet d'un système pignon et crémaillère.

Comme montré à la Fig. 8C, des ressorts (118) sont disposés autour des crampons (116), afin d'assurer l'escamotage de ces crampons lorsque ces derniers ne sont pas utilisés. Les ressorts (118) sont enfermés chacun dans un logement (non représenté).

Pour tous les véhicules, il est prévu au minimum un jeu de roues d'entrainement, à savoir les roues (32) et (34), et il peut y avoir quatre jeux ou davantage sur un camion remorque ou sur un wagon de chemin de fer.

En ce qui concerne la Fig. 9, il est montré ici l'unité de bande articulée à noyau (31) incluant la bande à noyau articulée (12) qui comporte des tampons caoutchouc (14) sur sa surface extérieure, et la première série d'aimants (16) sur sa surface intérieure. Dans cette disposition, des patins (130) sont substitués à un jeu de roues d'entrainement (32) et (34) montré à la Fig. 2. Ces patins (130) sont disposés à l'intérieur de la bande sans fin (12) de manière à assurer la stabilité du fonctionnement du véhicule. Des roues (40) pour l'établissement du profil de la bande articulée sont prévues comme dans l'unité (30) de la Fig. 2, pour la détermination du parcours de la bande articulée à noyau (12).

Pour ce qui est de la Fig. 10, il est représenté ici une vue arrière partielle d'un dispositif d'unité de voie électromagnétique (150) qui comporte pour son fonctionnement un moyen entièrement magnétique. Ce dispositif d'unité de voie (150) est similaire, au point de vue de l'aménagement, à l'unité de roulement de roue unique (10) montrée à la Fig. 1, mais il ne comporte pas la roue d'entrainement (28) de l'unité (10), ou les patins (130) de la Fig. 9. En effet, le dispositif d'unité de voie électromagnétique (150) est aménagé à l'intérieur de la bande articulée sans fin (12) d'une manière permettant de remplacer la roue d'entrainement (28) ou les roues d'entrainement (32) et (34) de la Fig. 2, ainsi que les patins (130) de la Fig. 9. Et le dispositif d'unité de voie (150) fonctionne à la manière d'un système de propulsion et de freinage pour le dispositif électromagnétique d'ensemble (10) de la Fig. 1 et le dispositif (30) de la Fig. 2. Afin de fixer le véhicule dans le dispositif d'unité de voie (150), on a prévu des rails de garde sur les extérieurs de la première série d'aimants (16) et de la deuxième série d'aimants (54).

Dans le dispositif entièrement magnétique (150) représenté à la Fig. 10, sont prévus, de façon similaire au dispositif (10), de la Fig. 1, les éléments suivants : les tampons caoutchouc (14) ; le harnais extérieur (26) ; la première série d'aimants (16) ; la troisième série d'aimants (24) ; les amortisseurs (22) ; la monture de roue (20) et la barre de fixation au véhicule (18). Des éléments également représentés à la Fig. 10, mais non dans l'unité (10) de la Fig. 1 sont : l'essieu de véhicule (76) ; le harnais intérieur (27) ; la deuxième série d'aimants (54) ; la quatrième série d'aimants (36) ; et la voie d'entrainement de roue unique (52).

Selon la présente invention, le dispositif électromagnétique (10) de la Fig. 1, le dispositif électromagnétique (30) de la Fig. 2, et le dispositif électromagnétique (150) de la Fig. 10 peuvent être aménagés en combinaison de façon à inclure les roues d'entrainement (28, 32 et 34), les patins (130) et le dispositif de voie électromagnétique (150) dans des bandes articulées (12) sur le même véhicule.

Les présents dispositifs de lévitation électromagnétiques (10) et (30) représentent des avantages pour un certain nombre d'organismes, y compris les administrations gouvernementales, les compagnies de chemins de fer, les propriétaires de voitures automobiles et de véhicules poids lourds, les compagnies d'assurances et les compagnies de transport aérien. Ces avantages sont exposés ci-après dans le Tableau Récapitulatif I.

## TABLEAU RECAPITULATIF I

## AVANTAGES - ECONOMIES

### A. Administrations Gouvernementales

1. Moins de détériorations causées aux routes, le poids étant distribué sur une base de contact plus grande.

2. Moins de réclamations adressées à l'Administration par suite d'accidents causés par suite de chaussées défoncées, de chaussées en mauvais état.

3. Réduction du déficit de la balance commerciale, par suite des économies de carburant réalisées du fait de l'emploi de moteurs de plus petit gabarit.

4. Durée de service plus longue pour les véhicules propriété de l'Etat.

5. Réduction des accidents corporels et des pertes de vies humaines, avec en conséquence augmentation de la main-d'oeuvre disponible et des fonds disponibles pour l'instruction publique.

6. Economies réalisées sur les frais de décharges publiques et réduction du volume de ces décharges, grâce à la diminution de la mise au rebut des pneumatiques.

### B. Voies ferrées

1. Réduction de l'usure sur les assises des voies ferrées, en raison de la distribution du poids, par conséquent économie sur les frais de remise en état, ainsi que sur les frais pour les traverses, grâce à l'utilisation d'un écartement plus important.

2. Réduction des coûts de locomotives, grâce à l'empoi de machines plus petites et plus légères.

3. Réduction des coûts de locomotives, grâce à l'utilisation d'une machine au lieu de trois ou quatre.

4. Elimination de dommages et de réclamations pour dommage par suite de tamponnements de wagons les uns contre les autres (constitution de rames, arrêts et démarrages).

5. Réduction des tarifs et/ou augmentation des bénéfices.

### Propriétaires de Voitures Automobiles et de Camions

1. Elimination des pneumatiques : utilisation de tampons seulement.

2. Plus de réparations et de rechapages de pneumatiques.

3. Equilibrage des pneumatiques.

4. Passage de pneumatiques d'hiver à des pneumatiques d'été.

5. Renforcement de la sécurité :
    a) Suppression des éclatements de pneumatiques.

b) Distances de freinage plus courtes.

c) Meilleure traction dans la conduite d'hiver.

d) Elimination de réparations ou de remplacements de pièces brisées par suite d'obstacles, de routes en mauvais état ou de chaussées défoncées :

aa) Pneumatiques éclatés ou coupés

bb) Jantes endommagées

cc) Essieux endommagés ou brisés

dd) Dégâts aux extrémités avant.

e) Elimination des accidents résultant des conditions de route précitées.

6. Diminution des risques pour la vie humaine et des risques de blesures corporelles.

7. Elimination de salaires perdus par suite d'accidents mortels ou de blessures.

8. Economies réalisées grâce à la prolongation de la durée de service des véhicules.

9. Economies réalisées grâce à la réduction du montant des primes d'assurances.

10. Economies réalisées sur l'essence/gas-oil grâce à un kilométrage plus élevé pour une même quantité de carburant.

11. Pas de frais de pneumatiques de rechange.

12. Durée de service plus longue des roulements à billes.

13. Elimination des frais représentés par le louage d'un véhicule lors de la réparation du véhicule du propriétaire.

## D. Compagnies d'Assurances

1. Diminution des prestations pour les sinistres (voitures automobiles/camions).

2. Réduction des dommages et des pertes en ce qui concerne le trafic aérien.

3. Réduction des indemnités à verser pour pertes de vies humaines et pour blessures.

## E. Compagnies de Transports Aériens

1. Sécurité contre les éclatements de pneumatiques.

2. Economies sur les pertes ou les détériorations d'équipements pour avions.

3. Economies sur les pertes de recettes consécutives aux réparations.

4. Minoration du montant des primes d'assurances.

5. Economies réalisées grâce aux suppressions de pneumatiques.

Des modifications pourront certes être apportées à la présente invention par des hommes de métier ; cependant, la présente invention comprend uniquement ce qui est défini par les revendications ci-annexées.

## Revendications

-1- Dispositif éléctromagnétique pour la lévitation et le déplacement d'un véhicule à roues sur une surface, caractérisé en ce qu'il comprend :

a) une bande à chainons (12) ou bande articulée sans fin prévue pour être en contact avec la surface sur laquelle se déplace ledit véhicule ;

b) une première série (16) et une deuxième série (54) d'aimants positionnés sur la surface intérieure (17) de ladite bande articulée et disposés de manière à repousser simultanément une troisième série (24) d'aimants suspendus à partir de la caisse dudit véhicule ; une quatrième série (36) d'aimants suspendus à partir des essieux dudit véhicule ;

c) une voie de roulement de roue disposée entre la première et la deuxième série d'aimants, positionnée sur la surface intérieure de ladite bande;

d) un minimum d'un jeu de roues d'entrainement métalliques positionnées sur les essieux dudit véhicule, et disposées de façon à s'engager avec ladite voie de roulement afin de déplacer ladite bande par la rotation desdites roues ; et

e) un jeu de harnais électriques (26-27) possédant chacun une barre métallique (70) à bord cannelé fixe, fixée auxdites roues, et un harnais de câblage électrique révolutif dans ledit bord cannelé en coordination avec la bande en mouvement, chacun desdits harnais électriques étant prévu pour conduire de l'énergie électrique depuis la source de courant électrique du véhicule jusqu'auxdites séries d'aimants positionnés sur la surface intérieure de ladite bande, de manière que lorsque les aimants desdites séries d'aimants suspendus à partir de la caisse du véhicule et des essieux desdites roues sont engagés, les aimants des séries d'aimants disposés sur la surface intérieure de ladite bande soient également excités afin de repousser lesdits aimants suspendus, ce qui assure ainsi le transfert du poids du véhicule depuis l'essieu jusqu'à ladite bande sans fin, de façon à suspendre le véhicule à roues et à réduire l'énergie nécessaire pour le déplacement dudit véhicule.

-2- Dispositif électromagnétique selon la revendication 1, caractérisé en ce que ladite surface est une surface sans eau.

-3- Dispositif électromagnétique selon la revendication 1, caractérisé en ce que les aimants desdites séries d'aimants sont des électro-aimants.

-4- Dispositif selon la revendication 1, caractérisé en ce que les roues du jeu de roues métalliques sont des roues d'entrainement (32-34).

-5- Dispositif électromagnétique selon la revendication 1 caractérisé en ce que la voie de roulement comporte une garde (63-64) pour maintenir les roues en position.

-6- Dispositif électromagnétique selon la revendication 1, caractérisé en ce que ladite bande articulée comporte une série de tampons (14) sur sa surface extérieure.

-7- Dispositif électromagnétique selon la revendication 6 caractérisé en ce qu'il est prévu un mécanisme (100) pour la mise en position saillante et pour l'escamotage de crampons de traction (116) à l'intérieur des tampons (14) dudit dispositif.

-8- Dispositif électromagnétique selon la revendication 1, caractérisé en ce qu'il est prévu une monture de roue (20) pour maintenir les roues sur les essieux.

-9- Dispositif électromagnétique selon la revendication 1 caractérisé en ce que les moyens pour le transfert du poids du véhicule sont contenus en totalité à l'intérieur dudit dispositif.

-10- Dispositif électromagnétique selon la revendication 1, caractérisé en ce que le véhicule est apte à se déplacer sur toute distance quelconque, sans aucune restriction de la surface sur laquelle il est déplacé.

-11- Dispositif électromagnétique selon la revendication 1, caractérisé en ce que des patins (130) sont prévus en remplacement desdites roues d'entrainement métalliques, lesdits patins étant disposés à l'intérieur de ladit bande sans fin de manière à assurer la stabilité du fonctionnement du véhicule.

-12- Dispositif électromagnétique selon la revendication 11, caractérisé en ce q'un dispositif d'unité de voie électromagnétique (150) est disposé à l'intérieur de ladite bande articulée sans fin de manière à pouvoir remplacer les roues d'entrainement (28) et les patins (130).

-13- Dispositif électromagnétique selon la revendication 12, caractérisé en ce qu'il fonctionne à la manière d'un système de propulsion et de freinage.

Fig. 1

Fig. 2

Fig.3

Fig.4 A

54

10    16    52

Fig.4 B

54

30    16    61    62

74

72    70    26+38

Fig.5

EP 0 347 337 A2

Fig. 6

90    86                    84        80
84                                    54
16                                    72          82
72                                    38
26
72                                    72
16
84                                    54
92                                    84
86
88                          *Fig. 7A*

*Fig. 7B*

86

_Fig.8A_

20
100
16
20
28
100
54
14
110
110
52

_Fig.8B_

100
102
102
20
106
112
104

_Fig.8C_

10
114
112
118
116

Fig.9

Fig.10